# FASCICULE DE BREVET EUROPEEN

(11) **EP 3 374 686 B1**
(45) Date de publication et mention de la délivrance du brevet: **06.05.2020**
(21) Numéro de dépôt: 16793893.5
(22) Date de dépôt: 09.11.2016
(51) Int. Cl.: F17C 11/00

(54) **RESERVOIR DE STOCKAGE D'HYDROGENE À HYDRURE METALLIQUE**
METALLHYDRID-WASSERSTOFFSPEICHERTANK
HYDROGEN STORAGE RESERVOIR WITH HYDRID METAL MATERIAL

(30) Priorité: 12.11.2015 FR 1560805
(43) Date de publication de la demande: 19.09.2018
(73) Titulaire: Commissariat à l'Énergie Atomique et aux Énergies Alternatives, 75015 Paris (FR)
(72) Inventeur: CHAISE, Albin, 38000 Grenoble (FR)
(74) Mandataire: Brevalex
(86) Numéro de dépôt international: PCT/EP2016/077144
(87) Numéro de publication internationale: WO 2017/081081

(56) Documents cités:
- EP-A2- 1 464 886
- EP-A2- 2 894 387
- US-A1- 2004 251 007
- US-A1- 2008 142 523
- US-A1- 2014 205 474

## Description

### DOMAINE TECHNIQUE ET ART ANTÉRIEUR

La présente demande se rapporte à la mise en œuvre d'un réservoir de stockage d'hydrogène à hydrures.

L'hydrogène peut être stocké sous forme comprimée entre 350 et 700 bars, ce qui pose des problèmes de sécurité. Il faut alors prévoir des réservoirs aptes à tenir ces pressions, sachant par ailleurs que ces réservoirs, peuvent être soumis à des chocs.

On sait également stocker de l'hydrogène sous forme liquide.

Cependant, ce stockage n'assure qu'un faible rendement de stockage et ne permet pas le stockage sur de longues durées.

Le passage d'un volume d'hydrogène de l'état liquide à l'état gazeux dans les conditions normales de pression et de température produit un accroissement de son volume d'un facteur important. Les réservoirs d'hydrogène sous forme liquide ne sont en général pas très résistants aux chocs mécaniques, cela pose d'importants problèmes de sécurité.

Il existe également le stockage d'hydrogène sous la forme d'hydrure.

Ce stockage autorise une densité volumique de stockage importante et met en œuvre une pression modérée d'hydrogène tout en minimisant l'impact énergétique du stockage sur le rendement global de la chaine hydrogène, i.e. de sa production à sa conversion en une autre énergie.

Le principe du stockage solide de l'hydrogène sous forme d'hydrure est le suivant : certains matériaux et en particulier certains métaux possèdent la capacité d'absorber l'hydrogène pour former un hydrure, cette réaction est appelée absorption.

L'hydrure formé peut à nouveau donner de l'hydrogène gazeux et un métal. Cette réaction est appelée désorption. L'absorption ou la désorption interviennent en fonction de la pression partielle d'hydrogène et la température.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

Le stockage de l'hydrogène est une réaction exothermique, i.e. qui dégage de la chaleur. Or une élévation trop importante de la température à l'intérieur du réservoir peut inhiber l'absorption d'hydrogène.

Il est donc connu d'intégrer un échangeur thermique à un réservoir de stockage d'hydrogène sur hydrure.

Le document US20040251007 A1 prévoit par exemple un réservoir avec un échangeur de chaleur qui est assemblé à une embase du réservoir au moyen de vis.

Le document US 2014/205474 divulgue un recevoir de stockage d'hydrogène.

Le document EP2894387 divulgue un réservoir pour stocker des liquides ou des gaz sous pression.

L'embase est elle-même fixée à une coque interne également à l'aide de vis.

Un tel assemblage peut notamment poser des problèmes d'étanchéité.

Il se pose le problème de réaliser un réservoir à hydrogène amélioré doté d'un matériau de stockage de l'hydrogène.

### EXPOSÉ DE L'INVENTION

Selon un aspect, la présente invention concerne, un réservoir de stockage de l'hydrogène par absorption dans un matériau de stockage de l'hydrogène, comportant :
- une enveloppe délimitant une cavité,
- un conteneur intégré à l'intérieur de la cavité, le conteneur contenant un matériau de stockage de l'hydrogène,
- au moins une embase au contact de l'enveloppe, l'embase étant dotée d'au moins un canal d'accès permettant d'établir une connexion fluidique entre l'intérieur de la cavité et l'extérieur de l'enveloppe,
l'embase et le conteneur étant assemblés de sorte qu'au moins un élément de l'embase dit « premier élément de fixation » et au moins un élément du conteneur dit « deuxième élément de fixation » coopèrent de sorte à former une liaison glissante, la liaison glissante est configurée de sorte que lors du remplissage en hydrogène du conteneur, le premier élément de fixation est apte à se déplacer par rapport au deuxième élément de fixation pour permettre au conteneur et à l'embase de s'écarter l'un de l'autre.

Ainsi, on prévoit un assemblage entre le conteneur et au moins une embase sans nécessairement faire appel à des vis, ce qui permet de mettre en œuvre un réservoir d'étanchéité améliorée.

Le fait de réaliser une liaison glissante permet en outre de pallier les variations dimensionnelles de l'enveloppe en fonctionnement sous pression.

La liaison est avantageusement une liaison linéique de sorte qu'un déplacement en translation de l'embase par rapport au conteneur peut être réalisé.

Le premier élément de fixation et le deuxième élément de fixation peuvent être emboités l'un dans l'autre.

La liaison glissante peut être en particulier une liaison linéaire annulaire formée par au moins un tube emboité dans un autre tube ou par au moins un pion emboité dans un tube.

Un mode de réalisation avantageux de l'assemblage prévoit que le premier élément de fixation est un premier conduit situé dans le prolongement du canal d'accès de l'embase et que le deuxième élément de fixation est un deuxième conduit d'accès au conteneur, le premier conduit et le deuxième conduit étant emboités l'un dans l'autre.

Dans ce cas, les éléments de fixation ont également pour fonction de permettre un acheminement de fluide.

Selon un mode de réalisation, le premier conduit est délimité par une paroi comportant un premier trou tandis que le deuxième conduit est délimité par une paroi comportant un deuxième trou apte à être disposé en regard du premier trou.

Dans ce cas, les éléments de fixation ont également pour fonction de permettre un acheminement de fluide ou de matière dans un espace périphérique au conteneur.

Un acheminement de gaz dans un espace périphérique au conteneur peut servir à refroidir ce dernier.

Un joint d'étanchéité intercalé entre la paroi du premier conduit et la paroi du deuxième conduit et doté d'un orifice disposé en regard du premier trou et du deuxième trou peut être prévu.

Avantageusement, on favorise l'acheminement de gaz dans un espace périphérique au conteneur aux basses pressions dans le réservoir.

Pour cela, la liaison glissante peut être configurée de sorte apte à passer d'une première position vers une deuxième position, la première position étant une position dans laquelle un passage fluidique est réalisé entre le canal d'accès et un espace de la cavité situé entre le conteneur et l'enveloppe, ledit espace s'étendant autour du premier conduit et du deuxième conduit, la deuxième position étant une position dans laquelle ledit passage fluidique est fermé.

Selon un mode de réalisation, lorsque le premier conduit est doté d'une paroi comportant un premier trou et que le deuxième conduit est doté d'une paroi comportant un deuxième trou, la liaison glissante peut être configurée de sorte que :
- dans la première position, le premier trou est placé en regard du deuxième trou,
- dans la deuxième position le premier trou est placé en regard de la paroi du deuxième conduit, le deuxième trou étant placé en regard de la paroi du premier conduit.

En variante, le premier conduit peut être formé par une paroi comportant un premier organe tandis que le deuxième conduit est formé par une paroi comportant un deuxième organe, la liaison glissante étant configurée de sorte que :
- dans la première position le premier organe est placé à distance du deuxième organe,
- dans la deuxième position le premier organe est placé en contact avec le deuxième organe.

Le premier organe et le deuxième organe peuvent être par exemple sous forme respectivement d'une première butée et d'une deuxième butée, ou d'un élément de blocage tel qu'une bille et d'une gorge.

Le réservoir peut être doté d'au moins un amortisseur configuré pour amortir un mouvement entre le premier élément de fixation et le deuxième élément de fixation.

Selon une possibilité de mise en œuvre, le premier élément de fixation peut être revêtu d'une zone en un matériau présentant un coefficient de frottement faible vis-à-vis du matériau du deuxième élément de fixation.

En variante, le deuxième élément de fixation peut être revêtu d'une zone en un matériau présentant un coefficient de frottement faible vis-à-vis du matériau du premier élément de fixation.

Cela permet de favoriser le déplacement des éléments de fixation formant la liaison glissante.

Avantageusement, le réservoir est un réservoir hybride, c'est-à-dire avec une coque composite plutôt que tout métallique. Un tel réservoir permet de stocker l'hydrogène en pression pour avoir de la disponibilité à tout moment et en particulier à basse température, ce qui n'est généralement pas possible avec un réservoir hydrure haute pression doté d'une enveloppe métallique. Un réservoir hybride permet d'augmenter la densité volumique de stockage.

Le réservoir hybride est en particulier de type IV, avec une coque interne à base de matériau polymère entourée d'une coque externe. Une telle coque est plus légère que les coques des réservoirs de type III dotés généralement d'une enveloppe métallique.

Une coque interne à base de matériau polymère améliore la durée de vie du réservoir : les cycles de chargement - déchargement en hydrogène s'accompagnent de cycles en pression qui peuvent avoir tendance à fatiguent le matériau de la coque. Une coque interne en polymère est plus déformable qu'une enveloppe métallique et fatigue par conséquent moins vite.

Une telle coque est solidaire de l'embase et peut être réalisée autour du conteneur sans nécessairement faire appel à des vis. Cela concourt à l'obtention d'un réservoir d'étanchéité améliorée.

Avantageusement, le conteneur peut être doté d'une structure d'échangeur thermique.

Le matériau de stockage de l'hydrogène du conteneur est typiquement un hydrure métallique.

La présente invention vise également une installation ou un véhicule automobile alimenté(e) en hydrogène à l'aide d'un réservoir de stockage tel que défini plus haut.

La présente invention concerne également un procédé de réalisation d'un réservoir tel que défini plus haut.

Selon un autre aspect, la présente invention prévoit un procédé de réalisation d'un réservoir à hydrogène contenant un matériau de stockage de l'hydrogène, comportant :
a) l'assemblage entre au moins une embase, et au moins un conteneur, l'embase étant dotée d'au moins un canal d'accès au réservoir, le conteneur contenant un matériau de stockage de l'hydrogène, puis
b) la formation d'une enveloppe autour du conteneur, l'enveloppe étant solidaire de l'embase et délimitant une cavité, le canal d'accès permettant d'établir une connexion fluidique entre l'intérieur de la cavité et l'extérieur de l'enveloppe
la liaison glissante est configurée de sorte que lors du remplissage en hydrogène du conteneur, le premier élément de fixation est apte à se déplacer par rapport au deuxième élément de fixation pour permettre au conteneur et à l'embase de s'écarter l'un de l'autre.

Avantageusement, le réservoir est de type IV, la formation de l'enveloppe comportant la réalisation d'une coque interne puis d'une coque externe sur la coque interne.

L'enveloppe peut être formée d'une coque interne en polymère.

L'étape b) de formation de l'enveloppe peut alors comprendre la réalisation de la coque interne en polymère par moulage dans un moule disposé sur l'embase et par injection d'au moins un matériau polymère ou d'un mélange de monomères dans le moule à travers le canal d'accès de l'embase.

On peut ainsi réaliser la coque interne tout en maintenant l'embase et le conteneur assemblés.

Avantageusement, cet assemblage est réalisé de sorte qu'au moins un élément de l'embase dit « premier élément de fixation » et au moins un élément du conteneur dit « deuxième élément de fixation » coopèrent de sorte à former une liaison glissante.

Le premier élément de fixation peut être un premier conduit situé dans le prolongement du canal d'accès de l'embase et comportant un premier trou. Le deuxième élément de fixation peut être un deuxième conduit, comportant un deuxième trou, l'assemblage étant réalisé à l'étape a) de tel sorte que le premier conduit et le deuxième conduit s'emboitent l'un dans l'autre, et de sorte que le premier trou est situé en regard du deuxième trou.

De cette manière on peut établir un passage à travers lequel un matériau, en particulier un polymère ou un mélange de monomères peut passer à l'étape b), afin de constituer une coque interne en polymère.

Le conteneur peut être doté d'au moins une ouverture d'accès placée en regard du canal d'accès de l'embase. Cette ouverture d'accès peut être fermée à l'étape b) de formation de l'enveloppe par un bouchon. On protège ainsi l'intérieur du conteneur lors de la réalisation de l'enveloppe du réservoir.

Le procédé peut comprendre en outre, après l'étape b) et préalablement à une étape de remplissage du réservoir en hydrogène : une étape de retrait du bouchon de sorte à libérer l'ouverture d'accès au conteneur.

Avantageusement, le canal d'accès et le bouchon ont des dimensions prévues de sorte à permettre un retrait du bouchon hors du réservoir en passant par le canal d'accès.

Le procédé peut comprendre en outre après l'étape b), une étape de remplissage du réservoir par de l'hydrogène, l'hydrogène étant injecté dans le conteneur, le réservoir étant agencé de sorte que lors du remplissage, de l'hydrogène est mis en circulation autour du conteneur.

On peut ainsi limiter l'échauffement du volume de gaz situé entre le conteneur et la coque interne lors de ce remplissage.

L'embase et le conteneur peuvent être configurés de sorte qu'au moins un élément de l'embase dit « premier élément de fixation » et au moins un élément du conteneur dit « deuxième élément de fixation » coopèrent de sorte à former une liaison glissante. Cette liaison peut être prévue de sorte que lors du remplissage en hydrogène du conteneur, le premier élément de fixation est apte à se déplacer par rapport au deuxième élément de fixation pour permettre au conteneur et à l'embase de s'écarter l'un de l'autre. Les éléments assemblés peuvent ainsi s'adapter aux variations de pression à l'intérieur du réservoir.

Selon une possibilité de mise en œuvre dans laquelle le premier élément de fixation est un premier conduit situé dans le prolongement du canal d'accès, dans lequel le deuxième élément de fixation est un deuxième conduit situé dans le prolongement d'une ouverture d'accès au conteneur, le premier conduit et le deuxième conduit étant emboités l'un dans l'autre, l'assemblage entre le premier conduit et le deuxième conduit peuvent être configurés pour successivement :
- ouvrir un espace de la cavité situé autour des conduits entre le conteneur et l'enveloppe, de sorte que de l'hydrogène circule dans cet espace,
- fermer ledit espace lorsque dans cet espace la pression atteint un seuil donné, de sorte à empêcher que de l'hydrogène circule dans cet espace. Lors du remplissage du réservoir en hydrogène, on peut ainsi réaliser une circulation d'hydrogène autour du conteneur aux basses pressions, puis lorsque la pression atteint un seuil donné, on stoppe cette circulation.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 est une vue en coupe longitudinale d'un exemple de réservoir à hydrogène selon l'invention représenté schématiquement et muni d'au moins une embase coopérant avec un conteneur à matériau de stockage de l'hydrogène de sorte à former une liaison glissante avec ce conteneur ;
- la figure 2 est une vue en coupe longitudinale en perspective de l'exemple de réservoir selon l'invention représenté schématiquement ;
- la figure 3 est une vue schématique d'éléments de fixation entre une embase et le conteneur;
- la figure 4 illustre un système de boucle de refroidissement par hydrogène du réservoir;
- la figure 5 illustre une étape de réalisation de la coque interne du réservoir ;
- la figure 6 illustre une configuration particulière d'un conduit d'embase et d'un conduit de conteneur ajourés pour permettre un passage de matière lors la réalisation de la coque interne du réservoir autour du conteneur ;
- la figure 7 sert à illustrer un exemple particulier de réalisation d'un réservoir à hydrogène selon l'invention ;
- la figure 8 sert à illustrer un autre exemple particulier de réalisation d'un réservoir à hydrogène selon l'invention avec une configuration permettant de faire circuler un fluide autour du conteneur ;
- les figures 9A et 9B sont des vues en coupes illustrant deux positions d'une liaison glissante entre une embase et un conteneur d'un réservoir suivant l'invention ;
- les figures 10 à 12 sont des vues schématiques d'organes de blocage configurés pour permettre successivement de laisser passer un fluide puis empêcher de laisser passer ce fluide dans un espace à l'intérieur du réservoir et situé autour du conteneur;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

En outre, dans la description ci-après, des termes ou expressions tel(le)s que « longitudinale », « latérale », « transversale » dépendent de l'orientation de la structure de réservoir et s'appliquent en considérant que cette structure est orientée de la façon illustrée dans les figures.

### EXPOSÉ DÉTAILLÉ DE MODES DE RÉALISATION PARTICULIERS

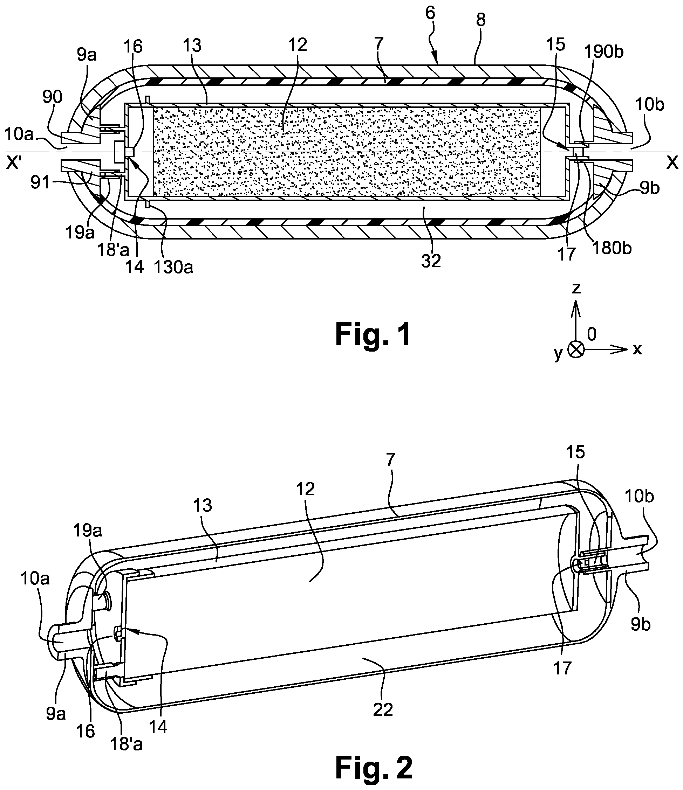

On se réfère à présent aux figures 1 et 2 donnant un exemple de réservoir à hydrure mis en œuvre suivant un mode de réalisation de la présente invention.

Le réservoir est ici formé par un élément creux 6 présentant une dimension longitudinale plus grande que sa dimension transversale et prenant dans cet exemple une forme de cylindre de révolution.

L'élément creux 6 est formé d'une enveloppe comportant une coque interne 7 recouverte d'une coque externe 8. La coque interne 7 permet d'assurer l'étanchéité tandis que la coque externe 8 est adaptée pour la résistance à la pression. Le réservoir est ici de « type IV » avec une coque interne 7 en matériau polymère. Le matériau polymère peut être par exemple un polyamide ou du polyéthylène ou du polyuréthane. La coque externe 8 est typiquement en matériau composite qui peut être à base de renfort fibreux (par exemple des fibres de verre ou des fibres de carbone dans une matrice en résine époxy).

Un tel réservoir est adapté aux hautes pressions, en particulier d'au moins 100 bars et présente une durée de vie importante. Ce réservoir est également plus léger que les réservoirs connus de type III et dont l'enveloppe est habituellement constituée d'un liner métallique.

Le réservoir est muni d'au moins une embase permettant d'assurer une connexion entre l'intérieur du réservoir et l'extérieur de la coque externe 8. L'embase (illustrée sur la figure 1 en coupe transversale) est une pièce ou un insert, permettant la jonction ou la connexion entre la cavité interne de la coque interne 7 et l'extérieur de celle-ci. D'un point de vue structural, il peut s'agir d'une pièce comportant un corps cylindrique creux 90 ouvert à ses extrémités, une de ses extrémités étant terminée par une collerette 91 munie ou non d'une zone d'ancrage mécanique, telle qu'un bourrelet, à sa périphérie.

Le bourrelet constitue la partie destinée à être en contact direct avec le matériau constitutif de la coque interne.

Avantageusement, comme dans l'exemple illustré, le réservoir comporte au moins deux embases 9a, 9b situées aux extrémités du réservoir pris dans le sens de sa longueur (soit une dimension parallèle à l'axe x du repère orthogonal [O ; x; y ; z] donné sur la figure 1). Le plus souvent, les embases 9a, 9b sont métalliques (par exemple, en acier ou en aluminium) et équipées respectivement d'ouvertures formant des canaux d'accès 10a et 10b au réservoir. Ces canaux d'accès 10a, 10b peuvent être configurés pour permettre une connexion avec un moyen d'alimentation en hydrogène tel qu'un tuyau.

Le réservoir est en outre doté d'un conteneur 13 apte à contenir un matériau de stockage de l'hydrogène, en particulier au moins un hydrure. L'hydrure métallique mis en œuvre est par exemple choisi dans la liste suivante : TiVCr, TiVMn, LaNis, TiFe, TiCrMn, TiVCrMo, Mg₂Ni, TiFeMn, LiBH₄+MgH₂, NaAlH₄, Mg, KSi. L'intégration d'hydrure(s) dans le réservoir permet de stocker environ deux fois plus d'hydrogène dans un même volume qu'un réservoir en pression sans hydrures. L'hydrogène est stocké à la fois sous forme solide dans une poudre d'hydrure et sous forme de gaz sous pression dans des espaces entre des grains de poudre. Les hydrures ont tendance à chauffer lorsqu'ils absorbent l'hydrogène.

Pour limiter cet échauffement, et permettre que les propriétés d'absorption de l'hydrure soient conservées, un échangeur thermique 12 (représenté de manière schématique sur la figure 1) peut être également intégré au conteneur 13.

L'échangeur 12 peut avoir une structure telle que décrite par la demande de brevet français déposée à l'INPI par la demanderesse sous le n° 14 62908. L'échangeur thermique 12 peut être formé de cellules mises en parallèle dans le flux d'hydrogène qui les traverse par un système de canaux de distribution. Les cellules contiennent de la poudre d'hydrure. Ces cellules sont perméables à l'hydrogène mais imperméables à la poudre d'hydrure.

Le conteneur 13 est muni d'un ou plusieurs éléments 18a, 180b dits « de fixation » par exemple sous forme de tubes ou de pions, disposés sur sa surface externe et prévus pour permettre de le fixer aux embases 9a, 9b. Les éléments de fixation du conteneur sont configurés pour coopérer avec d'autres éléments de fixation du réservoir de sorte à former une liaison glissante. Ces autres éléments de fixation sont prévus sur les embases et par exemple sous forme de tube(s) et/ou des pion(s). Par « liaison glissante » on entend que la liaison ou l'assemblage entre le conteneur 13 et la ou les embases 9a, 9b est tel qu'il permet un déplacement de la ou les embases 9a, 9b par rapport au conteneur 13. La liaison glissante est ici une liaison linéique de sorte qu'une embase 9a, 9b est susceptible de se déplacer en translation par rapport au conteneur 13, en particulier suivant un axe X'X parallèle à l'axe longitudinal du réservoir.

Dans l'exemple de réalisation des figures 1 et 2, les éléments de fixation intégrés à l'embase 9a sont sous forme d'un ou plusieurs tubes 19a qui s'emboitent respectivement avec un ou plusieurs pions 18'a disposés en vis-à-vis à une extrémité du conteneur 13. Il est également possible de doter une embase d'un ou plusieurs pions qui s'emboitent respectivement dans un ou plusieurs tubes disposés sur le conteneur 13. Un emboitement d'au moins un tube dans au moins un autre tube peut également être mis en œuvre. Ce système d'emboitement pion/tube ou tube/tube permet ici d'assurer une liaison mécanique glissante de type linéaire annulaire.

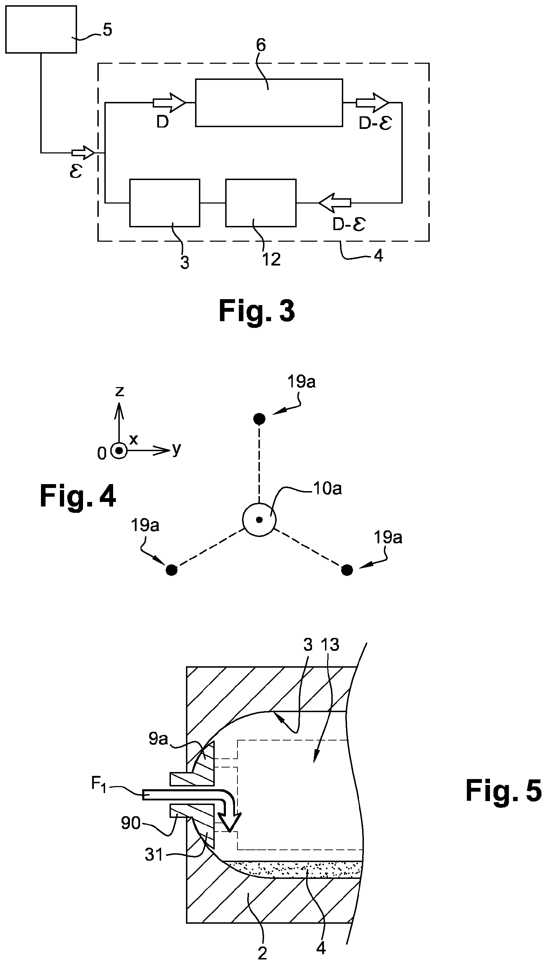

Une configuration avantageuse représentée sur la figure 3 prévoit 3 tubes ou pions sur une embase disposés à 120° autour de l'axe X'X longitudinal du réservoir afin de ne pas créer de ligne de faiblesse sur l'embase 9a.

La liaison glissante obtenue par emboitement d'éléments de fixation du conteneur 13 par rapport à des éléments de fixation de la ou les embases 9a, 9b permet de pallier des variations dimensionnelles de la coque interne 7 en fonctionnement sous pression. Par exemple sous l'effet d'une augmentation de pression dans le réservoir 6 durant un chargement en hydrogène de ce dernier, l'enveloppe du réservoir se dilate et les embases 9a et 9b ont tendance à s'écarter. Avec le système de liaison glissante, un écartement pouvant aller par exemple jusqu'à plusieurs mm peut être obtenu tout en maintenant l'assemblage entre le conteneur 13 et les embases 9a, 9b.

Le conteneur 13 est doté d'une ou plusieurs ouvertures d'accès 14, 15 situées à ses extrémités et disposées en regard respectivement de canaux d'accès 10a, 10b prévus respectivement dans les embases 9a, 9b.

Les ouvertures d'accès 14, 15 du conteneur 13 peuvent être fermées temporairement respectivement par l'intermédiaire de bouchons 16, 17 de protection. Les bouchons 16, 17 de protection temporaire sont retirés lorsqu'on effectue un remplissage en hydrogène du réservoir ou lorsque le réservoir est en cours d'utilisation.

Un réservoir 6 tel que décrit précédemment est muni d'un échangeur thermique 12 contenant le ou les hydrures et utilise un fluide caloporteur différent de l'eau. Ce fluide caloporteur peut être un flux d'hydrogène qui traverse le réservoir.

On se rapporte à présent à la figure 4 servant à illustrer un principe de refroidissement par hydrogène d'un réservoir tel que décrit précédemment.

Lorsqu'un débit D d'hydrogène froid rentre dans le réservoir 6, ce flux est dirigé vers les hydrures contenus dans ce réservoir 6. Une portion ε de l'hydrogène est absorbée par les hydrures qui chauffent. Une portion restante D-ε de l'hydrogène se réchauffe alors au contact des hydrures (et les refroidit) puis sort du réservoir 6.

L'hydrogène chaud passe ensuite dans un échangeur de chaleur 12 pour être refroidi puis dans un circulateur 3 et recommence le circuit de la boucle 4. Cette boucle 4 est alimentée en hydrogène par une alimentation à haute pression 5 pour compenser la part de gaz absorbée par les hydrures et pour augmenter progressivement la pression dans toute la boucle 4. L'hydrogène est alors à la fois un fluide caloporteur et le gaz à stocker.

Une fois le réservoir en pression et les hydrures chargés d'hydrogène, le réservoir 6 est déconnecté de la boucle 4. Il peut ensuite être utilisé, par exemple pour alimenter une pile à combustible.

Un exemple de procédé de fabrication d'un réservoir du type de celui décrit précédemment va à présent être donné.

Le procédé de réalisation du réservoir, peut comprendre au préalable des étapes consistant à disposer le matériau de stockage de l'hydrogène et la structure d'échangeur dans le conteneur 13.

L'échangeur 12 supportant l'hydrure est d'abord placé dans le conteneur 13. Ce conteneur 13 peut être ouvert pour y placer l'hydrure par exemple avec une bride démontable 130a telle que représentée sur la figure 1. Cette bride 130a assure une étanchéité une fois refermée. Les ouvertures d'accès 14, 15 sont prévues pour permettre ultérieurement de faire passer un flux d'hydrogène à l'intérieur du conteneur 13. Les ouvertures d'accès 14, 15 du conteneur sont bouchées temporairement avec les bouchons 16 et 17 de façon à ce que le conteneur 13 soit hermétiquement fermé afin de protéger l'hydrure d'une pollution par exemple à l'air, à l'eau, ou à des solvants, ou tout élément durant la fabrication ultérieure des coques interne et externe 7, 8 du réservoir.

Les bouchons 16 et 17 peuvent être vissés dans les ouvertures 14 et 15. Pour permettre d'assurer l'étanchéité, des joints toriques peuvent être également prévus.

On effectue alors un assemblage entre au moins une embase 9a, et le conteneur 13 par emboitement d'éléments de fixation de type tube et/ou pion tels que décrits précédemment, l'autre embase 9b pouvant être solidaire du conteur 13 ou également assemblée par emboitement.

Une fois cet assemblage réalisé, on forme la coque interne 7 en matériau polymère autour du conteneur 13.

Pour cela, on utilise un moule 2 dont la cavité interne 3 est de forme correspondante à la forme de la coque interne 7 que l'on souhaite obtenir.

L'étape d'assemblage entre l'embase 9a et le conteneur 13 est rendue aisée par les éléments de fixation formant une liaison glissante. Cette étape d'assemblage peut être éventuellement réalisée dans le moule 2.

Après introduction de la ou les embases 9a, 9b dans le moule 2 on effectue une étape de dépôt d'un matériau 4 polymère ou formé d'un mélange de monomères sur la paroi interne du moule et sur la partie ou les parties de la ou les embase(s) destinées à être en contact avec le matériau de la coque interne 7. On forme ainsi la coque interne 7 susmentionnée solidaire de la ou les embases 9a, 9b.

La figure 5 représente une partie d'un moule 2 dans laquelle l'embase 9a est introduite. Lorsque l'embase 9a a une géométrie similaire à celle décrite précédemment et munie d'une collerette 91, l'introduction dans le moule 2 peut être effectuée de sorte à ce que la collerette 91 soit directement en contact avec la paroi du moule 2 et à ce que le corps cylindrique creux 90 traverse une ouverture du moule 2 présentant un diamètre permettant l'introduction du corps cylindrique via cette ouverture.

La formation de la coque interne 7 peut ensuite se faire par un procédé de moulage de type roto-moulage. Le roto-moulage comprend typiquement les opérations suivantes :
i) après introduction, dans le moule, de la ou les embases 9a, 9b assemblée(s) au conteneur 13 une opération de remplissage de la cavité interne 3 du moule 2 par une poudre de polymère ou un mélange de monomères ;
ii) une opération de chauffage du moule 2 jusqu'à une température au moins égale à la température de fusion du polymère ou de polymérisation des monomères;
iii) de manière concomitante à l'étape ii), une opération de rotation du moule, générant ainsi un dépôt sur la paroi interne du moule et sur les parties de la ou les embases émergeant dans la cavité interne 3 du moule 2, moyennant quoi l'on obtient une coque interne 7 de forme correspondant à la géométrie interne du moule, cette coque interne 7 étant solidaire des embases 9a, 9b et disposée autour du conteneur 13 ;
iv) éventuellement, une réitération des opérations i) à iii), dans le but de réaliser plusieurs couches de polymère, en vue d'obtenir une épaisseur plus importante ;
v) éventuellement, une ou plusieurs réitération des opérations i) à iii) mais avec une poudre d'un polymère différent ;

Une opération de refroidissement pour solidifier le dépôt ou les dépôts de polymère peut être ensuite réalisée.

Puis, une opération de démoulage de la coque interne 7 des parois du moule est réalisée.

Dans ce procédé, l'introduction à l'étape i) de polymère ou du mélange de monomère (symbolisée par la flèche F1 sur la figure 5) est réalisée à travers le canal 10a prévu dans l'embase 9a.

L'opération de rotation du moule peut s'effectuer, avantageusement, autour de deux axes de rotation généralement perpendiculaires, en vue de provoquer un dépôt uniforme du polymère sur la paroi interne du moule et sur les parties de la ou les embases émergeant dans la cavité interne du moule 2.

Un procédé alternatif à celui qui vient d'être décrit et dans lequel on viendrait introduire le conteneur 13 à hydrure doté d'une structure d'échangeur après la fabrication d'une partie de la coque interne 7 en polymère pourrait s'avérer moins avantageux. Il nécessiterait en effet d'utiliser une embase avec une bride démontable, ce qui pourrait poser des problèmes de coût et de difficulté de mise en œuvre. En outre une telle bride pourrait ensuite constituer une source de fuite potentielle du conteneur. Pour ces raisons, on réalise avantageusement la coque interne 7 en polymère autour de l'échangeur 12 et/ou du conteneur 13, une fois que l'assemblage avec la ou les embases est effectué.

Une fois que la coque interne 7 solidarisée avec la ou les embases 9a, 9b, est obtenue, on enveloppe ensuite, cette coque interne 7 par un matériau composite à renfort fibreux, lequel va permettre d'assurer la tenue mécanique sous pression du réservoir.

Cette étape de dépôt peut être réalisée, notamment, par enroulement filamentaire de fibres continues imprégnées d'une résine sur la surface externe de la coque interne 7, moyennant quoi l'on forme une coque externe 8 en matériau composite à renfort fibreux.

Une fois les coques interne 7 et externe 8 réalisées, on peut effectuer un chargement en hydrogène du réservoir.

Pour cela, on retire les bouchons 16, 17 aux extrémités du conteneur 13.

Avantageusement, les bouchons 17 et 16 sont prévus avec des dimensions telles qu'ils peuvent passer dans les canaux 10a et 10b des embases 9a, 9b en regard desquels ils sont situés et être retirés hors du réservoir. On peut en particulier prévoir les bouchons 16 et 17 avec un diamètre inférieur à celui des canaux 10, 10b.

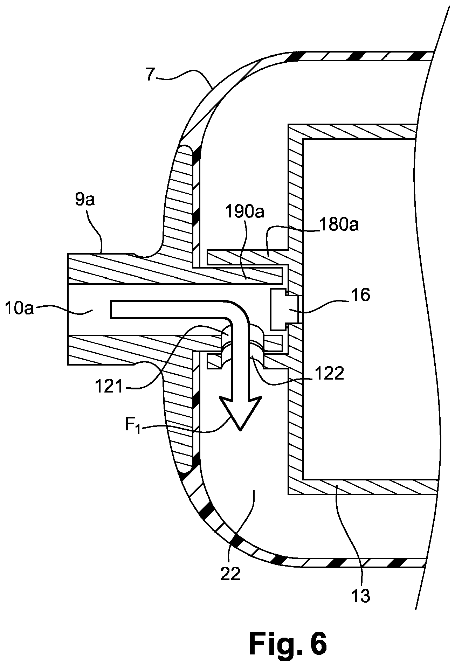

Selon un mode de réalisation du réservoir, on prévoit des trous dans les éléments de fixation de l'embase et du conteneur, en particulier pour permettre ou favoriser le passage de matériau constitutif de la coque interne 7 lors de la réalisation de cette coque interne 7. Un exemple de réalisation est illustré sur la figure 6.

L'embase 9a dispose d'un élément de fixation sous forme d'un premier conduit 190a, par exemple un tube, situé dans le prolongement du canal 10a. La paroi latérale de ce conduit 190a est ajourée et comporte un trou 121 disposé en regard d'un autre trou 122 pratiqué dans un deuxième conduit 180a rattaché au conteneur 13 et servant d'élément de fixation du conteneur 13. Le conduit 190a de l'embase 9a et le conduit 180a du conteneur 13 sont emboités l'un dans l'autre de sorte à former la liaison glissante. Un mélange liquide de monomère introduit par le canal 10a de l'embase 9 (l'introduction étant symbolisée par la flèche F1) est susceptible de passer à travers les trous 121, 122 et accéder au volume périphérique 32 du conteneur vers la paroi du moule.

Pour améliorer la résistance aux chocs des éléments du réservoir lorsqu'une embase et/ou le conteneur se déplacent dans l'axe X'X longitudinal du réservoir, un système d'amortissement mécanique peut être prévu.

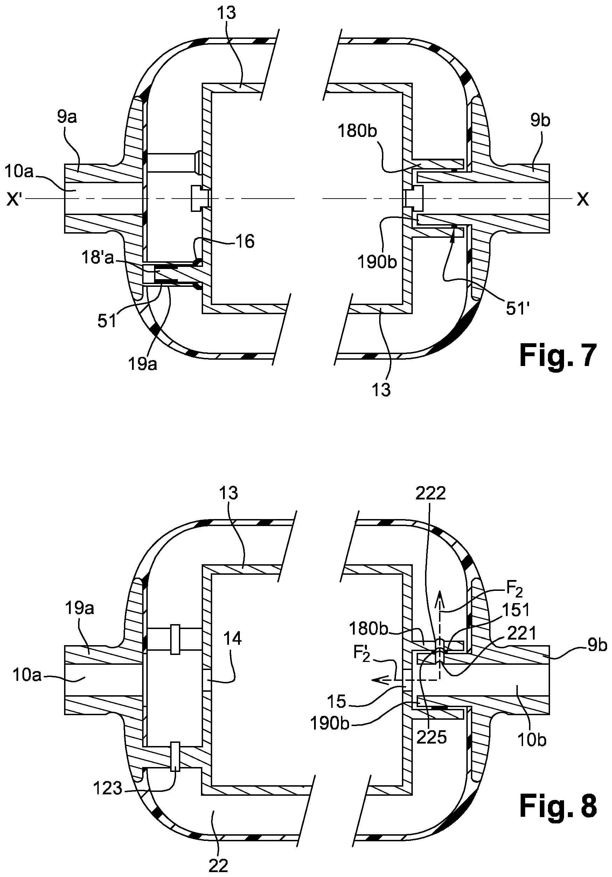

Le glissement d'un élément de fixation du conteneur 13 par rapport à un autre élément de fixation de l'embase peut être amorti en fin de course par le biais d'un amortisseur 20. Sur l'exemple de réalisation particulier de la figure 7, cet amortisseur 20, par exemple sous forme d'une bague en matériau déformable tel que du caoutchouc est prévu à un extrémité d'un élément de fixation 19a de l'embase 9a ici sous forme de tube.

En variante ou en combinaison on peut prévoir un amortisseur 20 sur un élément de fixation du conteneur 13.

Pour favoriser le glissement entre les éléments de fixation, le ou les éléments de fixation d'une embase ou du conteneur peuvent être avantageusement revêtus d'une zone en un matériau présentant un faible coefficient de frottement.

Dans l'exemple de réalisation de la figure 7, un élément de fixation (pion 18'a) du conteneur 13 est revêtu d'une zone 51 en un matériau présentant un coefficient de frottement faible vis-à-vis du matériau de l'élément de fixation (tube 19a) de l'embase 9a sur lequel il est destiné à glisser. Pour un élément de fixation métallique, on choisit par exemple un matériau à faible coefficient de frottement tel que du PTFE ou polyamide. Pour favoriser le glissement entre un conduit 190a de l'embase 9b et un conduit 180b du conteneur 13, une autre zone 51' en un matériau présentant un coefficient de frottement faible vis-à-vis de celui des conduits 180b, 190a est prévue et intercalée entre ces conduits 180b, 190b. Cette autre zone 51' est ici en outre configurée pour former un joint d'étanchéité intercalée entre les parois définissant ces conduits 180b, 190b.

Sur la figure 8, une variante d'agencement des éléments de fixation du réservoir est illustrée.

Le réservoir est cette fois doté d'une liaison glissante entre une embase 9b et le conteneur 13, tandis qu'une liaison fixe encore appelée « liaison rigide » est prévue entre l'autre embase 9a et le conteneur 13. La liaison rigide peut être réalisée à l'aide d'au moins un écrou 123 entre au moins un élément de l'embase 9a et au moins un élément du conteneur 13. Un tel agencement avec d'un côté une liaison rigide et d'un autre côté une liaison glissante permet de conserver une bonne tenue mécanique de l'ensemble tout en permettant une variation de volume du réservoir.

Lorsqu'on introduit de l'hydrogène (dont la circulation est symbolisée par les flèche F2 et F'2) par le canal 10b de l'embase 9b, ce gaz est susceptible de pénétrer dans une ouverture d'accès 15 du conteneur 13 située en regard du canal 10b de l'embase 9b.

Durant une montée en pression qui accompagne le chargement du réservoir en hydrogène, un échauffement du gaz est susceptible d'intervenir par effet de compression adiabatique dans le volume situé autour du conteneur, appelé espace périphérique, car ce volume n'est pas balayé par le flux d'hydrogène, contrairement à l'espace situé dans le conteneur. Si cette montée en température est trop importante, une dégradation de la coque interne 7 en polymère est susceptible de se produire.

Pour pallier ce problème sans nécessairement devoir introduire l'hydrogène à basse température, un agencement tel qu'illustré sur la figure 8 peut être prévu. L'embase 9b et le conteneur 13 sont configurés de sorte à permettre à un flux d'hydrogène de passer autour du conteneur 13 c'est-à-dire par un espace interne au réservoir et périphérique au conteneur 13. En effet, une circulation de gaz dans cet espace périphérique 32 au cours de la montée en pression permet de limiter l'échauffement du matériau de stockage de l'hydrogène à l'intérieur du conteneur 13. Cette circulation d'hydrogène autour du conteneur 13 sera également appelée fonctionnement en « court-circuit ».

La circulation d'hydrogène dans l'espace périphérique 32 au conteneur 13 est ici réalisée grâce à des trous 221, 222 disposés dans les éléments de fixation de l'embase 9b et du conteneur 13. Un premier conduit 190b de l'embase 9b dans le prolongement du canal 10b comporte au moins un premier trou 221 tandis qu'un deuxième conduit 180b du conteneur 13 qui est emboité dans le premier conduit 190b comporte au moins un deuxième trou 222 en regard du premier trou 121, de sorte à créer un passage pour un fluide et permettre à ce fluide d'accéder à un espace périphérique 32 qui s'étend autour des conduits 180b, 190b, entre la coque interne 7 et le conteneur 13.

Pour permettre d'améliorer l'étanchéité entre les conduits 180b, 190b un joint ou un pallier 151 d'étanchéité est avantageusement disposé dans un espace inter-conduit situé entre les trous 221, 222. Ce joint 151 d'étanchéité peut être ajouré et muni lui-même d'un orifice 225 disposé en regard du premier trou 221 et du deuxième trou 222.

La circulation de gaz autour du conteneur 13 lors du chargement du réservoir en hydrogène revêt un intérêt particulier au début du chargement du réservoir, c'est-à-dire aux plus basses pressions, car c'est à ce moment que la vitesse d'échauffement du gaz est la plus importante.

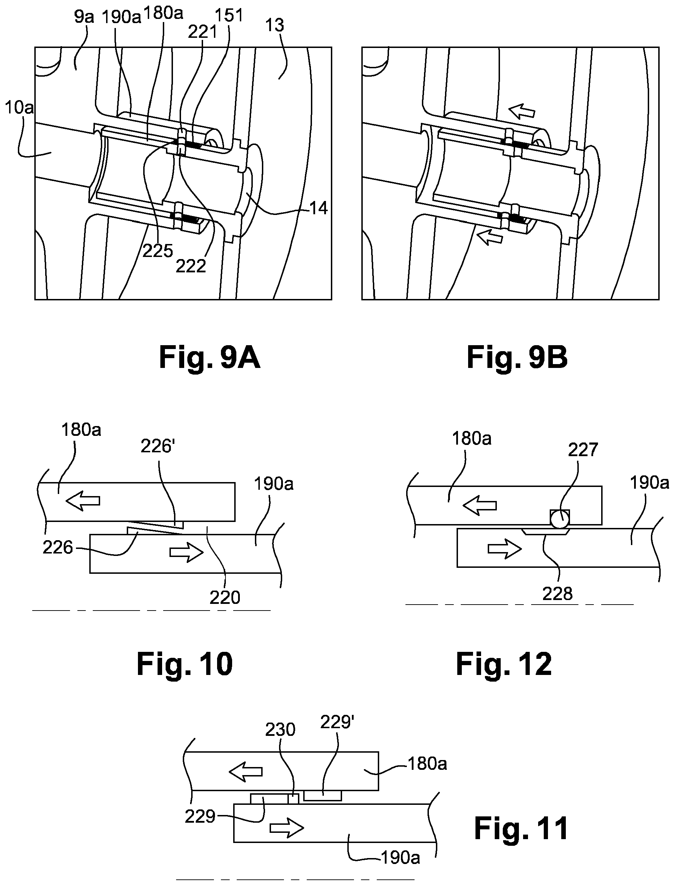

Un mode de réalisation particulier d'une liaison glissante entre une embase 9a et le conteneur 13 est illustré sur les figures 9A-9B. Il permet de privilégier l'établissement d'un court-circuit aux basses pressions.

La liaison glissante est ici réalisée à l'aide d'un premier conduit 190a, situé dans le prolongement du canal 10a de l'embase 9a et d'un deuxième conduit 180a situé dans le prolongement d'une ouverture d'accès 14 au conteneur 13. Le premier conduit 190a et le deuxième conduit 180a sont emboités l'un dans l'autre et aptes à coulisser l'un par rapport à l'autre. Le premier conduit 190a est défini par une paroi dans laquelle des premiers trous 221 sont pratiqués.

Dans une première position (figure 9A) de la liaison glissante entre l'embase 9a et le conteneur 13, les premiers trous 221 sont disposés respectivement en regard de deuxièmes trous 222 pratiqués dans une paroi du deuxième conduit 180a, de sorte qu'un gaz, en particulier de l'hydrogène, peut passer par les trous 221, 222 et accéder au volume périphérique 32 au conteneur 13. Cette première position est susceptible d'être adoptée lorsque l'on débute le chargement du réservoir en hydrogène, et que la pression à l'intérieur du réservoir est basse c'est-à-dire inférieure à la moitié de la pression finale de remplissage, cette pression finale étant comprise par exemple entre 350 et 700 bars.

Du fait du passage d'hydrogène dans le volume périphérique 32 du réservoir, la pression augmente. L'embase 9a et le conteneur 13 ont alors tendance à s'écarter l'un par rapport à l'autre. Lorsque la pression passe un seuil donné, la liaison glissante adopte une position telle qu'illustré sur la figure 9B.

Dans cette deuxième position, les premiers trous 221 ne sont plus disposés en regard des seconds trous 222, mais cette fois en regard de la paroi du deuxième conduit 180a. L'hydrogène ne peut alors plus passer par les trous 221, 222 et accéder au volume périphérique 32 au conteneur 13. Cet hydrogène est alors amené uniquement vers l'ouverture 14 d'accès du conteneur 13.

Ainsi, les trous 221, 222 sont alignés lorsque le réservoir contient une faible pression de gaz, ce qui permet au gaz de circuler dans le volume périphérique, puis les trous 221, 222 se décalent l'un par rapport à l'autre lorsque la pression de gaz augmente et que le réservoir s'allonge, les trous 221, 222 se trouvent alors partiellement ou totalement obstrués. Ce décalage provient d'une déformation élastique du réservoir et en particulier d'un allongement dans une direction longitudinale sous l'effet de la pression, tandis que la longueur du conteneur 13 ne varie pas. Le décalage et l'obstruction du passage formé lorsque les trous 221, 222 sont alignés permet de réduire ou d'annuler le débit de H₂ transitant par le volume périphérique 32.

D'autres exemples de réalisations pour permettre de laisser ouvert puis obturer un passage entre le volume périphérique 32 du conteneur 13 et un canal d'accès au réservoir situé dans une embase sont donnés sur les figures 11, 12, 13.

L'ouverture puis la fermeture d'un passage fluidique entre d'une part un canal d'accès au réservoir et d'autre part le volume périphérique au conteneur 32 peuvent être assurées au moyen d'organes disposés sur les parois des conduits 190a, 180a.

Sur la figure 10, on prévoit au moins une première butée 226 agencée sur une paroi de conduit 190b d'une embase 9b, et au moins une deuxième butée 226' agencée sur une paroi de conduit 180b du conteur 13.

Dans une première position de la liaison glissante (illustrée sur la figure 10), la première butée 226 et la deuxième butée 226' sont situées à distance l'une de l'autre de sorte qu'un gaz peut passer dans un espace 220 entre la paroi de conduit 190b d'embase 9b et la paroi de conduit 180b du conteur 13.

Dans une deuxième position de la liaison glissante (non représentée), la première butée 226 et la deuxième butée 226' sont en contact l'une de l'autre de sorte à empêcher un passage de gaz entre la paroi interne d'un conduit et la paroi externe de l'autre conduit. Les butées 226, 226' ont par exemple une forme de trièdre.

Une variante de réalisation illustrée sur la figure 11, prévoit des butées 229, 229' sous forme de blocs parallélépipédiques, au moins une butée 229 comportant ou étant rattachée à une portion formant un joint 230 d'étanchéité.

Sur la figure 12, le système de verrouillage de l'accès au volume périphérique du conteneur 13 est réalisé cette fois à l'aide d'un joint d'étanchéité 227 par exemple sous forme de bille apte à se loger dans une gorge 228, le système étant susceptible d'adopter une première position (représentée sur la figure 13) dans laquelle le joint 227 est à distance de la gorge 228 de manière à permettre une circulation de gaz et un accès au volume périphérique 32. Puis, lors du remplissage du réservoir en hydrogène lorsque la pression augmente et atteint un seuil donné, l'embase s'écarte par rapport au conteneur de sorte que le système de verrouillage adopte une deuxième position (non représentée sur la figure 12) dans laquelle le joint 227 est placé en dehors de la gorge 228 de manière à empêcher une circulation de gaz et un accès au volume périphérique 32.

Un réservoir selon l'invention peut avantageusement être appliqué au stockage d'hydrogène embarqué sur des véhicules ou être intégré par exemple dans une installation dans laquelle le réservoir est couplé à une ou plusieurs piles à hydrogène.

## Revendications

1. Procédé de réalisation d'un réservoir à hydrogène contenant un matériau de stockage de l'hydrogène, comportant :
a) l'assemblage entre au moins une embase (9a, 9b), et au moins un conteneur (13), l'embase étant dotée d'au moins un canal d'accès (10a, 10b) au réservoir, le conteneur contenant un matériau de stockage de l'hydrogène tel qu'un hydrure métallique, l'assemblage étant réalisé de sorte qu'au moins un élément (190a, 190b, 19a) de l'embase dit « premier élément de fixation » et au moins un élément (180a, 180b, 18'a) du conteneur dit « deuxième élément de fixation » coopèrent de sorte à former une liaison glissante telle qu'elle permet un déplacement en translation de l'embase (9a,9b) par rapport au conteneur 13 puis,
b) formation d'une enveloppe (7-8) autour du conteneur, l'enveloppe étant solidaire de l'embase et délimitant une cavité, le canal d'accès permettant d'établir une connexion fluidique entre l'intérieur de la cavité et l'extérieur de l'enveloppe,
la liaison glissante étant configurée de sorte que lors du remplissage en hydrogène du conteneur, le premier élément de fixation est apte à se déplacer par rapport au deuxième élément de fixation pour permettre au conteneur (13) et à l'embase de s'écarter l'un de l'autre.

2. Procédé selon la revendication 1, dans lequel le réservoir comporte une coque interne en polymère, la formation de l'enveloppe comportant la réalisation de la coque interne (7) puis d'une coque externe (8) sur la coque interne, l'étape b) de formation de l'enveloppe comprenant en particulier la réalisation de la coque interne en polymère par moulage dans un moule disposé sur l'embase et par injection d'au moins un matériau polymère ou d'un mélange de monomères dans le moule à travers le canal d'accès de l'embase.

3. Procédé selon l'une des revendication 2, dans lequel l'embase (9a, 9b) comporte un premier conduit (190a, 190b) situé dans le prolongement du canal d'accès (10a) et dans lequel le conteneur (13) comporte un deuxième conduit (180a, 180b), le premier conduit comportant au moins un premier trou, le deuxième conduit comportant un deuxième trou, l'assemblage étant réalisé à l'étape a) de tel sorte que le premier conduit (190a, 190b) et le deuxième conduit (180a, 180b) s'emboitent l'un dans l'autre, et de sorte que le premier trou (121) est situé en regard du deuxième trou (122) de façon à établir un passage à travers lequel le matériau polymère ou le mélange de monomères passe lors de la réalisation de la coque interne à l'étape b).

4. Procédé selon l'une des revendications 1 à 3, dans lequel le conteneur (13) comporte au moins une ouverture d'accès (14, 15) placée en regard du canal d'accès (10a, 10b) de l'embase (9a, 9b), l'ouverture d'accès (14) étant fermée à l'étape b) par un bouchon (16), le procédé comprenant en outre, après l'étape b) et préalablement à une étape de remplissage du réservoir en hydrogène : une étape de retrait du bouchon de sorte à libérer l'ouverture d'accès (14) au conteneur (13), le canal d'accès (10a) et le bouchon (16) ayant des dimensions prévues de préférence de sorte à permettre un retrait du bouchon hors du réservoir en passant par le canal d'accès (10a, 10b).

5. Procédé selon l'une des revendication 1 à 4, comprenant en outre après l'étape b), une étape de remplissage du réservoir par de l'hydrogène, l'hydrogène étant injecté dans le conteneur, (13) le réservoir étant agencé de sorte que lors du remplissage, de l'hydrogène est mis en circulation autour du conteneur (13).

6. Procédé selon la revendication 5, dans lequel le premier élément de fixation est un premier conduit (190a, 190b) situé dans le prolongement du canal d'accès (10a, 10b), dans lequel le deuxième élément de fixation (180a, 180b) est un deuxième conduit situé dans le prolongement d'une ouverture d'accès (14, 15) au conteneur (13), le premier conduit et le deuxième conduit étant emboîtés l'un dans l'autre, l'assemblage entre le premier conduit et le deuxième conduit étant configuré pour successivement :
- ouvrir un espace (32) de la cavité situé autour des conduits (190b, 180b) entre le conteneur (13) et l'enveloppe, de sorte que de l'hydrogène circule dans cet espace,
- fermer ledit espace (32) lorsque dans cet espace (32) la pression atteint un seuil donné, de sorte à empêcher que de l'hydrogène ne circule dans cet espace.

7. Réservoir de stockage de l'hydrogène par absorption dans un matériau de stockage de l'hydrogène, comportant :
- une enveloppe (7-8) délimitant une cavité,
- un conteneur (13) intégré à l'intérieur de la cavité, le conteneur contenant un matériau de stockage de l'hydrogène tel qu'un hydrure métallique,
- au moins une embase (9a, 9b) accolée et solidaire de l'enveloppe, l'embase étant dotée d'au moins un canal d'accès permettant d'établir une connexion fluidique entre l'intérieur de la cavité et l'extérieur de l'enveloppe,
l'embase (9a, 9b) et le conteneur (13) étant configurés de sorte qu'au moins un élément (190a, 190b, 19a) de l'embase dit « premier élément de fixation » et au moins un élément (180a, 180b, 18'a) du conteneur dit « deuxième élément de fixation » coopèrent de sorte à former une liaison glissante telle qu'elle permet un déplacement en translation de l'embases (9a,9b) par rapport au conteneur 13, la liaison glissante étant configurée de sorte que lors du remplissage en hydrogène du conteneur, le premier élément de fixation est apte à se déplacer par rapport au deuxième élément de fixation pour permettre au conteneur (13) et à l'embase de s'écarter l'un de l'autre.

8. Réservoir selon la revendication 7, dans lequel la liaison glissante est une liaison linéique formée par au moins un tube (19a, 19b) emboité dans un autre tube (18a, 18b) ou par au moins un pion (18'a) emboité dans un tube (19a).

9. Réservoir selon l'une des revendications 7 ou 8, dans lequel le premier élément de fixation est un premier conduit (190a, 180b) situé dans le prolongement du canal d'accès (10a) de l'embase (9a) et dans lequel le deuxième élément de fixation est un deuxième conduit (180a) d'accès (14) au conteneur (13), le premier conduit et le deuxième conduit étant emboîtés l'un dans l'autre.

10. Réservoir selon la revendication 9, dans lequel le premier conduit (190a, 190b) est délimité par une paroi comportant un premier trou (121, 221), le deuxième conduit (180a, 180b) étant délimité par une paroi comportant un deuxième trou (122, 222) apte à être disposé en regard du premier trou.

11. Réservoir selon la revendication 10, comprenant un joint d'étanchéité (151) intercalé entre la paroi du premier conduit (190b) et la paroi du deuxième conduit (180b), le joint d'étanchéité comprenant un orifice (225) apte à être disposé en regard du premier trou (221) et du deuxième trou (222).

12. Réservoir selon l'une des revendications 7 à 11, comprenant un amortisseur (20) pour amortir un mouvement entre le premier élément de fixation et le deuxième élément de fixation.

13. Réservoir selon l'une des revendications 7 à 12,
dans lequel le premier élément de fixation est revêtu d'une zone (51, 51') en un matériau présentant un coefficient de frottement faible vis-à-vis du matériau du deuxième élément de fixation ou,
dans lequel le deuxième élément de fixation est revêtu d'une zone en un matériau présentant un coefficient de frottement faible vis-à-vis du matériau du premier élément de fixation,

14. Réservoir selon la revendication 13, dans lequel le premier élément de fixation est un premier conduit et dans lequel le deuxième élément de fixation est un deuxième conduit, ladite zone (51') formant un joint d'étanchéité disposé en le premier conduit et le deuxième conduit.

15. Réservoir selon l'une des revendications 7 à 14, dans lequel le premier élément de fixation est un premier conduit (190a, 190b) dans le prolongement du canal d'accès (10a, 10b) et le deuxième élément de fixation est un deuxième conduit (180a, 180b) menant à une ouverture d'accès (14, 15) au conteneur (13), le premier conduit et le deuxième conduit étant emboîtés l'un dans l'autre,
la liaison glissante étant apte à passer d'un première position vers une deuxième position,
la première position étant une position dans laquelle un passage fluidique est réalisé entre le canal d'accès (10a, 10b)) et un espace (32) de la cavité situé entre le conteneur (13) et l'enveloppe (7-8), ledit espace (32) s'étendant autour du premier conduit et du deuxième conduit, la deuxième position étant une position dans laquelle ledit passage fluidique est fermé.

16. Réservoir selon l'une des revendications 7 à 15, dans lequel le premier élément de fixation est un premier conduit et dans lequel le deuxième élément de fixation est un deuxième conduit, le premier conduit (190a, 190b) étant doté d'une paroi comportant un premier trou (221, 222), le deuxième conduit (180a, 180b) étant doté d'une paroi comportant un deuxième trou (122, 222), la liaison glissante étant configurée de sorte que :
- dans une première position, le premier trou (221) est placé en regard du deuxième trou (222),
- dans une deuxième position le premier trou (221) est placé en regard de la paroi du deuxième conduit, le deuxième trou (222) étant placé en regard de la paroi du premier conduit.

17. Réservoir selon l'une des revendications 7 à 15, dans lequel le premier élément de fixation est un premier conduit et dans lequel le deuxième élément de fixation est un deuxième conduit, le premier conduit (190a, 190b) étant doté d'une paroi comportant un premier organe (226, 228, 229) le deuxième conduit (180a, 180b) étant doté d'une paroi comportant un deuxième organe (226', 227 229'), la liaison glissante étant configurée de sorte que :
- dans une première position le premier organe (226, 229) est placé à distance du deuxième organe (226', 229') de sorte à permettre un passage de fluide entre la paroi du premier conduit et la paroi du deuxième conduit,
- dans une deuxième position le premier organe (226, 229) est placé en contact avec le deuxième organe (226', 229') de sorte à empêcher un passage de fluide entre la paroi du premier conduit et la paroi du deuxième conduit.

18. Réservoir selon la revendication 17, dans lequel le premier organe (229) ou le deuxième organe (227) comporte un joint d'étanchéité.

## Patentansprüche

1. Verfahren zur Herstellung eines Wasserstofftanks, der ein Wasserstoffspeichermaterial enthält, umfassend:
a) Zusammenfügen wenigstens einer Basis (9a, 9b) und wenigstens eines Behälters (13), wobei die Basis mit wenigstens einem Zugangskanal (10a, 10b) zu dem Tank versehen ist, wobei der Behälter ein Wasserstoffspeichermaterial wie zum Beispiel ein Metallhydrid enthält, wobei das Zusammenfügen derart realisiert wird, dass wenigstens ein Element (190a, 190b, 19a) der Basis, genannt "erstes Befestigungselement", und wenigstens ein Element (180a, 180b, 18'a) des Behälters, genannt "zweites Befestigungselement", derart zusammenwirken, dass sie eine Gleitverbindung derart bilden, dass eine Translationsverlagerung der Basis (9a, 9b) mit Bezug zu dem Behälter (13) ermöglicht wird, und dann
b) Bilden einer Hülle (7-8) um den Behälter herum, wobei die Hülle mit der Basis verbunden ist und einen Hohlraum begrenzt, wobei der Zugangskanal die Herstellung einer Fluidverbindung zwischen dem Inneren des Hohlraums und dem Äußeren der Hülle ermöglicht,
wobei die Gleitverbindung derart konfiguriert ist, dass während des Füllens des Behälters mit Wasserstoff das erste Befestigungselement sich relativ zu dem zweiten Befestigungselement verlagern kann, um es dem Behälter (13) und der Basis zu ermöglichen, sich voneinander zu entfernen.

2. Verfahren nach Anspruch 1, bei dem der Behälter eine Innenschale aus Polymer umfasst, wobei das Bilden der Hülle die Herstellung der Innenschale (7) und dann einer Außenschale (8) auf der Innenschale umfasst, wobei der Schritt b) des Bildens der Hülle insbesondere die Herstellung der Innenschale aus Polymer mittels Formgießen in einer Form umfasst, die auf der Basis angeordnet ist, und durch Injizieren wenigstens eines Polymermaterials oder einer Mischung von Monomeren in die Form durch den Zugangskanal der Basis hindurch.

3. Verfahren nach Anspruch 2, bei dem die Basis (9a, 9b) eine erste Leitung (190a, 190b) umfasst, die in der Verlängerung des Zugangskanals (10a) angeordnet ist, und bei dem der Behälter (13) eine zweite Leitung (180a, 180b) umfasst, wobei die erste Leitung wenigstens ein erstes Loch umfasst, wobei die zweite Leitung ein zweites Loch umfasst, wobei das Zusammenfügen im Schritt a) derart realisiert wird, dass die erste Leitung (190a, 190b) und die zweite Leitung (180a, 180b) ineinander eingefügt werden, und derart, dass das erste Loch (121) gegenüber dem zweiten Loch (122) derart angeordnet ist, dass ein Durchgang hergestellt wird, durch den hindurch das Polymermaterial oder die Mischung von Monomeren während der Realisierung der Innenschale im Schritt b) passiert.

4. Verfahren nach einem der Ansprüche 1 bis 3, bei dem der Behälter (13) wenigstens eine Zugangsöffnung (14, 15) umfasst, die gegenüber dem Zugangskanal (10a, 10b) der Basis (9a, 9b) platziert ist, wobei die Zugangsöffung (14) im Schritt b) mittels eines Stopfens (16) geschossen ist, wobei das Verfahren ferner nach dem Schritt b) und vor einem Schritt des Füllens des Tanks mit Wasserstoff einen Schritt des Entfernens des Stopfens derart umfasst, dass die Zugangsöffnung (14) zum Behälter (13) freigesetzt wird, wobei der Zugangskanal (10a) und der Stopfen (16) Abmessungen haben, die vorzugsweise dazu vorgesehen sind, ein Entfernen des Stopfens aus dem Tank heraus durch den Zugangskanal (10a, 10b) hindurch zu ermöglichen.

5. Verfahren nach einem der Ansprüche 1 bis 4, ferner umfassend nach dem Schritt b) einen Schritt des Füllens des Tanks mit Wasserstoff, wobei der Wasserstoff in den Behälter (13) injiziert wird, wobei der Tank dazu ausgelegt ist, dass der Wasserstoff während des Füllens in Zirkulation um den Behälter (13) herum ersetzt wird.

6. Verfahren nach Anspruch 5, bei dem das erste Befestigungselement eine erste Leitung (190a, 190b) ist, die in der Verlängerung des Zugangskanals (10a, 10b) angeordnet ist, bei dem das zweite Befestigungselement (180a, 180b) eine zweite Leitung ist, die in der Verlängerung einer Zugangsöffnung (14, 15) zu dem Behälter (13) angeordnet ist, wobei die erste Leitung und die zweite Leitung ineinander eingefügt werden, wobei das Zusammenfügen der ersten Leitung und der zweiten Leitung für folgende sukzessive Schritte konfiguriert ist:
- Öffnen eines Raums (32) des Hohlraums, der um die Leitungen (190b, 180b) zwischen dem Behälter (13) und der Hülle angeordnet ist, derart, dass der Wasserstoff in diesem Raum zirkuliert,
- Schließen des Raums (32), wenn der Druck in diesem Raum (32) eine gegebene Schwelle erreicht, derart, dass verhindert wird, dass der Wasserstoff in diesem Raum zirkuliert.

7. Tank zur Speicherung von Wasserstoff mittels Absorption in einem Wasserstoffspeichermaterial, umfassend:
- eine Hülle (7-8), die einen Hohlraum begrenzt,
- einen Behälter (13), der im Inneren des Hohlraums integriert ist, wobei der Behälter ein Wasserstoffspeichermaterial wie zum Beispiel ein Metallhydrid enthält,
- wenigstens eine angebaute und mit der Hülle verbundene Basis (9a, 9b), wobei die Basis mit wenigstens einem Zugangskanal versehen ist, der die Herstellung einer Fluidverbindung zwischen dem Inneren des Hohlraums und dem Äußeren der Hülle ermöglicht,
wobei die Basis (9a, 9b) und der Behälter (13) derart konfiguriert sind, dass wenigstens ein Element (190a, 190b, 19a) der Basis, genannt "erstes Befestigungselement", und wenigstens ein Element (180a, 180b, 18'a) des Behälters, genannt "zweites Befestigungselement" derart zusammenwirken, dass sie eine Gleitverbindung derart bilden, dass eine Translationsverlagerung der Basis (9a, 9b) mit Bezug zu dem Behälter (13) ermöglicht wird,
wobei die Gleitverbindung derart konfiguriert ist, dass während des Füllens des Behälters mit Wasserstoff das erste Befestigungselement sich relativ zu dem zweiten Befestigungselement verlagern kann, um es dem Behälter (13) und der Basis zu ermöglichen, sich voneinander zu entfernen.

8. Tank nach Anspruch 7, bei dem die Gleitverbindung eine lineare Verbindung ist, gebildet durch wenigstens ein Rohr (19a, 19b), das in ein anderes Rohr (18a, 18b) eingefügt ist, oder durch einen Stift (18'a), der in ein Rohr (19a) eingefügt ist.

9. Tank nach einem der Ansprüche 7 oder 8, bei dem das erste Befestigungselement eine erste Leitung (190a, 180b) ist, die in der Verlängerung des Zugangskanals (10a) der Basis (9a) angeordnet ist, und bei dem das zweite Befestigungselement eine zweite Leitung (180a) zum Zugang (14) zum Behälter (13) ist, wobei die erste Leitung und die zweite Leitung ineinander eingefügt sind.

10. Tank nach Anspruch 9, bei dem die erste Leitung (190a, 190b) durch eine Wand begrenzt ist, die ein erstes Loch (121, 221) umfasst, wobei die zweite Leitung (180a, 180b) durch eine Wand begrenzt ist, die ein zweites Loch (122, 222) umfasst, das dazu ausgelegt ist, gegenüber dem ersten Loch angeordnet zu sein.

11. Tank nach Anspruch 10, umfassend eine Dichtverbindung (151), die zwischen der Wand der ersten Leitung (190b) und der Wand der zweiten Leitung (180b) eingebaut ist, wobei die Dichtverbindung eine Öffnung (225) umfasst, die dazu ausgelegt ist, gegenüber dem ersten Loch (221) und dem zweiten Loch (222) angeordnet zu sein.

12. Tank nach einem der Ansprüche 7 bis 11, umfassend einen Dämpfer (20) zum Dämpfen einer Bewegung zwischen dem ersten Befestigungselement und dem zweiten Befestigungselement.

13. Tank nach einem der Ansprüche 7 bis 12,
bei dem das erste Befestigungselement mit einer Zone (51, 51') aus einem Material beschichtet ist, das einen geringen Reibungskoeffizienten im Hinblick auf das Material des zweiten Befestigungselements aufweist, oder
bei dem das zweite Befestitungselement mit einer Zone aus einem Material beschichtet ist, das einen geringen Reibungskoeffizienten im Hinblick auf das Material des ersten Befestigungselements aufweist.

14. Tank nach Anspruch 13, bei dem das erste Befestigungselement eine erste Leitung ist, und bei dem das zweite Befestigungselement eine zweite Leitung ist, wobei die Zone (51') eine Dichtverbindung bildet, die in der ersten Leitung und der zweiten Leitung angeordnet ist.

15. Tank nach einem der Ansprüche 7 bis 14, bei dem das erste Befestigungselement eine erste Leitung (190a, 190b) in der Verlängerung des Zugangskanals (10a, 10b) ist, und das zweite Befestigungselement eine zweite Leitung (180a, 180b) ist, die zu einer Zugangsöffnung (14, 15) zum Behälter (13) führt, wobei die erste Leitung und die zweite Leitung ineinander eingefügt sind,
wobei die Gleitverbindung dazu ausgelegt ist, sich von einer ersten Position in Richtung einer zweiten Position zu verlagern,
wobei die erste Position eine Position ist, in der ein Fluiddurchgang realisiert wird zwischen dem Zugangskanal (10a, 10b) und einem Raum (32) des Hohlraums, der zwischen dem Behälter (13) und der Hülle (7-8) angeordnet ist, wobei sich der Raum (32) um die erste Leitung und die zweite Leitung herum erstreckt, wobei die zweite Position eine Position ist, in der der Fluiddurchgang geschlossen ist.

16. Tank nach einem der Ansprüche 7 bis 15, bei dem das erste Befestigungselement eine erste Leitung ist, und bei dem das zweite Befestigungselement eine zweite Leitung ist, wobei die erste Leitung (190a, 190b) mit einer Wand versehen ist, die ein erstes Loch (221, 222) umfasst, wobei die zweite Leitung (180a, 180b) mit einer Wand versehen ist, die ein zweites Loch (122, 222) umfasst, wobei die Gleitverbindung derart konfiguriert ist, dass:
- in einer ersten Position das erste Loch (221) gegenüber dem zweiten Loch (222) platziert ist,
- in einer zweiten Position das erste Loch (221) gegenüber der Wand der zweiten Leitung platziert ist, wobei das zweite Loch (222) gegenüber der Wand der ersten Leitung platziert ist.

17. Tank nach einem der Ansprüche 7 bis 15, bei dem das erste Befestigungselement eine erste Leitung ist, und bei dem das zweite Befestigungselement eine zweite Leitung ist, wobei die erste Leitung (190a, 190b) mit einer Wand versehen ist, die ein erstes Organ (226, 228, 229) umfasst, wobei die zweite Leitung (180a, 180b) mit einer Wand versehen ist, die ein zweites Organ (226', 227, 229') umfasst, wobei die Gleitverbindung derart konfiguriert ist, dass:
- in einer ersten Position das erste Organ (226, 229) in einem Abstand von dem zweiten Organ (226', 229') derart platziert ist, dass ein Fluiddurchgang zwischen der Wand der ersten Leitung und der Wand der zweiten Leitung ermöglicht wird,
- in einer zweiten Position das erste Organ (226, 229) in Kontakt mit dem zweiten Organ (226', 229') derart platziert ist, dass ein Fluiddurchgang zwischen der Wand der ersten Leitung und der Wand der zweiten Leitung verhindert wird.

18. Tank nach Anspruch 17, bei dem das erste Organ (229) oder das zweite Organ (227) eine Dichtverbindung umfasst.

## Claims

1. Method for making a hydrogen tank containing a hydrogen storage material, comprising:
a) assembly of at least one base plate (9a, 9b) and at least one container (13), the base plate being provided with at least one access channel (10a, 10b) to the tank, the container containing a hydrogen storage material such as a metal hydride, the assembly being fixed such that at least one element (190a, 190b, 19a) of the base plate called the "first attachment element" and at least one element (180a, 180b, 18'a) of the container called the "second attachment element" cooperate so as to form a sliding link such that it enables a translational displacement of the base plate (9a, 9b) relative to the container 13 then,
b) formation of an envelope (7-8) around the container, the envelope being rigidly fixed to the base plate and delimiting a cavity, the access channel establishing a fluid connection between the interior of the cavity and the exterior of the envelope, the sliding link being configured such that when the container is being filled with hydrogen, the first attachment element can displace relative to the second attachment element so that the container (13) and the base plate can move away from each other.

2. Method according to claim 1, wherein the tank comprises a polymer inner shell, formation of the envelope comprising fabrication of the inner shell (7) and then an outer shell (8) on the inner shell, the envelope formation step b) comprising in particular production of the polymer inner shell by moulding in a mould placed on the base plate and by the injection of at least one polymer material or a mixture of monomers in the mould through the base plate access channel.

3. Method according to claim 2, wherein the base plate (9a, 9b) comprises a first duct (190a, 190b) located along the prolongation of the access channel (10b) and wherein the container (13) comprises a second duct (180a, 180b), the first duct comprising at least one first hole, the second duct comprising a second hole, the assembly being made in step a) such that the first conduit (190, 190b) and the second conduit (180a, 180b) engage one into the other, such that the first hole (121) is located facing the second hole (122) so as to set up a passage through which the polymer material or the mixture of monomers passes while fabricating the inner shell in step b).

4. Method according to one of claims 1 to 3, wherein the container (13) comprises at least one access opening (14, 15) located facing the access channel (10a, 10b) of the base plate (9a, 9b), the access opening (14) being closed in step b) by a plug (16), the method also comprising a step after step b) and before a step to fill the tank with hydrogen, to remove the plug so as to release the access opening (14) to the container (13), the dimensions of the access channel (10a) and the plug (16) preferably being chosen so as to enable the plug to be removed from the tank passing through the access channel (10a, 10a).

5. Method according to one of claims 1 to 4, also comprising a step after step b), to fill the tank with hydrogen, the hydrogen being injected into the container (13), the tank being arranged such that when it is being filled, hydrogen is circulated around the container (13).

6. Method according to claim 5, wherein the first attachment element is a first duct (190a, 190b) located along the prolongation of the access channel (10a, 10b), wherein the second attachment element (180a, 180b) is a second duct located along the prolongation of an opening (14, 15) providing access to the container (13), the first duct and the second duct being engaged one into the other, the assembly between the first duct and the second duct being configured to successively:
- open a space (32) in the cavity located around the ducts (190a, 180b) between the container (13) and the envelope, such that hydrogen circulates in this space,
- close said space (32) when the pressure in this space (32) reaches a given threshold, so as to prevent hydrogen from circulating in this space.

7. Hydrogen storage tank by absorption of hydrogen in a storage material, comprising:
- an envelope (7-8) delimiting a cavity,
- a container (13) integrated inside the cavity, the container containing a hydrogen storage material such as a metal hydride,
- at least one base plate (9a, 9b) adjacent to and fixed to the envelope, the base plate being provided with at least one access channel used to make a fluid connection between the inside of the cavity and the outside of the envelope,
- the base plate (9a, 9b) and the container (13) being configured such at that at least one element (190a, 190b, 19a) of the base plate called the "first attachment element" and at least one element (180a, 180b, 18'a) of the container called the "second attachment element" cooperate so as to form a sliding link such that it enables a translational displacement of the base plate (9a, 9b) relative to the container 13,
- the sliding link being configured such that when the container is being filled with hydrogen, the first attachment element is capable of displacing relative to the second attachment element so that the container (13) and the base plate can move away from each other.

8. Tank according to claim 7, wherein the sliding link is a linear link formed by at least one tube (19a, 19b) engaged in another tube (18a 18b) or by at least one pin (18a') engaged in a tube (19a).

9. Tank according to one of claims 7 or 8, wherein the first attachment element is a first duct (190a; 180b) located along the prolongation of the access channel (10a) of the base plate (9a) and wherein the second attachment element is a second duct (180a) providing access (14) to the container (13), the first duct and the second duct being engaged one in the other.

10. Tank according to claim 9, wherein the first duct (190a; 190b) is delimited by a wall comprising a first hole (121, 221), the second duct (180a, 180b) being delimited by a wall comprising a second hole (122, 222) that can be arranged facing the first hole.

11. Tank according to claim 10, comprising a seal (151) intercalated between the wall of the first duct (190b) and the wall of the second duct (180b), the seal also comprising an orifice (225) that can be placed facing the first hole (221) and the second hole (222).

12. Tank according to one of claims 7 to 11, comprising a damper (20) to damp a movement between the first attachment element and the second attachment element.

13. Tank according to one of claims 7 to 12,
wherein the first attachment element is coated with a zone (51, 51') made of a material with a low coefficient of friction compared with the material of the second attachment element or,
wherein the second attachment element is coated with a zone made of a material with a low coefficient of friction compared with the material of the first attachment element.

14. Tank according to claim 13, wherein the first attachment element is a first duct and wherein the second attachment element is a second duct, said zone (51') forming a seal located in the first duct and in the second duct.

15. Tank according to one of claims 7 to 14, wherein the first attachment element is a first duct (190a, 190b) along the prolongation of the access channel (10a, 10b) and the second attachment element is a second duct (180a, 180b) leading to an opening (14, 15) providing access to the container (13), the first duct and the second duct being engaged one in the other,
the sliding link being capable of changing from one position to a second position,
the first position being a position in which a fluid passage is made between the access channel (10a, 10b) and a space (32) in the cavity located between the container (13) and the envelope (7-8), said space (32) extending around the first duct and the second duct, the second position being a position in which said fluid passage is closed.

16. Tank according to one of claims 7 to 15, wherein the first attachment element is a first duct and wherein the second attachment element is a second duct, the first duct (190a, 190b) being provided with a wall comprising a first hole (221, 222), the second duct (180a, 180b) being provided with a wall comprising a second hole (122, 222), the sliding link being configured such that,
- in a first position, the first hole (221) is placed facing the second hole (222),
- in a second position, the first hole (221) is placed facing the wall of the second duct, the second hole (222) being placed facing the wall of the first duct.

17. Tank according to one of claims 7 to 15, wherein the first attachment element is a first duct and wherein the second attachment element is a second duct, the first duct (190a, 190b) being provided with a wall comprising a first element (226, 228, 229), the second duct (180a, 180b) being provided with a wall comprising a second element (226', 227', 229'), the sliding link being configured such that,
- in a first position, the first element (226, 229) is placed at a distance from the second element (226', 229') so as to create a fluid passage between the wall of the first duct and the wall of the second duct,
- in a second position, the first element (226, 229) is placed in contact with the second element (226', 229') so as to prevent a fluid passage between the wall of the first duct and the wall of the second duct.

18. Tank according to claim 17, wherein the first element (229) or the second element (227) comprises a seal.
